# EUROPEAN PATENT SPECIFICATION

(11) **EP 2 298 575 B1**
(45) Date of publication and mention of the grant of the patent: **24.04.2013**
(21) Application number: 10163108.3
(22) Date of filing: 18.05.2010
(51) Int. Cl.: B60B 3/08, B60B 5/02, B60B 25/00

(54) **A rim for a wheel of a seeder machine**
Felge für ein Rad einer Sämaschine
Jante pour la roue d'une semeuse

(30) Priority: 16.09.2009 IT MO20090229
(43) Date of publication of application: 23.03.2011
(73) Proprietor: M.B.F. S.r.l., 42025 Cavriago, Reggio Emilia (IT)
(72) Inventor: Magnani, Annalisa, 42025, CAVRIAGO (REGGIO EMILIA) (IT)
(74) Representative: Colò, Chiara

(56) References cited:
- EP-A1- 0 065 086
- DE-A1-102006 034 025
- US-A- 4 732 428
- US-A- 4 733 730
- US-A- 5 533 793

## Description

The invention relates to a rim for a wheel of a seeder machine and a wheel comprising the rim.

The rim and wheel of the present invention are normally used in seeding tools, in particular direct-seeding seeders. The wheels in question have functional characteristics which considerably differentiate them from usual vehicle wheels.

The wheels commonly comprise discs which create a trench in the earth which is destined to receive the seeds. Apart from maintaining a seeding depth and supporting the seeding tools as they proceed along the field being seeded, the wheels are provided with rotation and translation motions with respect to the disc thereof which enable the disc to be kept clean of accumulation of soil. The wheels are further conformed in such a way as to prevent earth infiltration between the disc and the rim of the wheel and to fill in the trench dug by the disc following the planting of the seeds.

All the described movements, and the mechanical devices causing them, are well known and are therefore not further described or illustrated as they do not relate to the specific object of the present invention.

An example of a wheel for seeders of known type is illustrated in US patent US 5533793. These wheels are provides with special tyres, mounted on the wheel rim, which exhibit a peripheral crown, or lip, which is placed in contact, and drags against, the disc which is arranged at the internal part of the wheel. In this way the peripheral crown of the tyre insulates the internal recess of the wheel from the outside environment, preventing any entry of earth between the disc and the rim.

To facilitate detachment of the earth from the tyre, and thus guarantee a constant dept of insertion of the seed in the earth, the tyre must be particularly flexible such as to deform on contact with the earth and then free itself, in its elastic return, of the earth which might have remained attached. This necessary elasticity of the tyre at times causes detachment of the peripheral crown from the disc, with a consequent undesired entry of earthy into the internal part of the wheel rim.

Other examples of prior art rims are known from documents DE 102006034025, EP0065086, US4733730, US5533793. In particular, DE102006034025 discloses a rim according thepreambleof claim 1.

In rims of known type this problem is further accentuated by the fact that the internal part of the wheel, the part facing towards the disc, exhibits a split section in profile which, in the hub zone, distances not irrelevantly from the disc. This means that between the disc and the rim a chamber of significant dimensions is defined, the conformation of which tends to retain accumulations of earth that penetrate between the disc and the rim.

A further possible drawback of known wheels is represented by the fact that the earth can attach to the external part of the wheel and make motion difficult and imprecise. Obviously the described drawbacks are more commonly present in a case where the seeding is done in soft or very moist soil.

The aim of the present invention is to make available a wheel for agricultural use which guarantees perfect cleanliness of the disc and prevents the formation of blocks of earth both internally and externally of the wheel.

An advantage of the present invention is that the rim is perfectly suited to realisation in a plastic material, such that a wheel can be produced which is considerably lighter than known-type wheels. This is very important as given the large number of wheels seeders are equipped with, there is a considerable saving in terms of overall weight of the seeder machine.

A further advantage of the present invention is that it provides a wheel which is easy to mount and demount.

Further characteristics and advantages of the present invention will better emerge from the non-limiting description that follows of a preferred but not exclusive embodiment of the invention, as illustrated in the accompanying figures of the drawings, in which:
figure 1 is a section view of a rim of the present invention;
figure 1a is a first alternative embodiment of the rim of figure 1;
figure 1b is a second alternative embodiment of the rim of figure 1;
figure 2 is a section view of a pair of wheels equipping the rim of the present invention illustrated in figure 1.

The rim of the present invention comprises the main body 21, 22, equipped with a central hub 3, for associating the rim to a rotation axis Ro, and a channel 4, positioned on the periphery of the main body 2 and predisposed to receive a tyre 40.

With reference to the position of a disc 5 which is part of a wheel for seeders, which will be more full described herein below, the main body 2 comprises an external portion 21 and an internal portion 22 which are releasably coupled to one another. The internal portion 22 is provided with an external surface 22a which on a section plane containing the rotation axis Ro exhibits a concave curved profile.

With respect to the overall profile of usual wheel rims for seeders, the profile of the external surface 22a of the internal portion 22 of the rim offers important advantages. Differently to what has always been considered in the sector of rims in question, the profile of the present invention provides considerable properties of resistance and rigidity, superior to the characteristics of the profiles of the wheels at present available. This leads to the very important advantage given by the fact that the internal portion 22 can very advantageously be made of plastic, thanks to its characteristics of resistance and rigidity. The realisation of the internal portion 22 enables the weight of the rim to be considerably reduced. Naturally the internal portion 22 could also be made of metal, with the aim of increasing the resistance in a case in which there are no particular requirements for containing the weight of the wheel.

Further, the profile of the present invention prevents accumulations of earth building up on the external surface 22a of the internal portion 22.

To this end, in order to further facilitate removal of any accumulations of earth on the external surface 22a of the internal portion 22, the profile of the external surface 22a exhibits two end portions 23 which are reciprocally divergent, each of which forms, in a distancing direction from the rotation axis Ro, an acute angle with respect to a plane that is perpendicular to the rotation axis Ro. In this way, the portion of the external surface 22a which, during rotation of the rim, is in proximity of the earth, facilitates removal of any accumulations of earth.

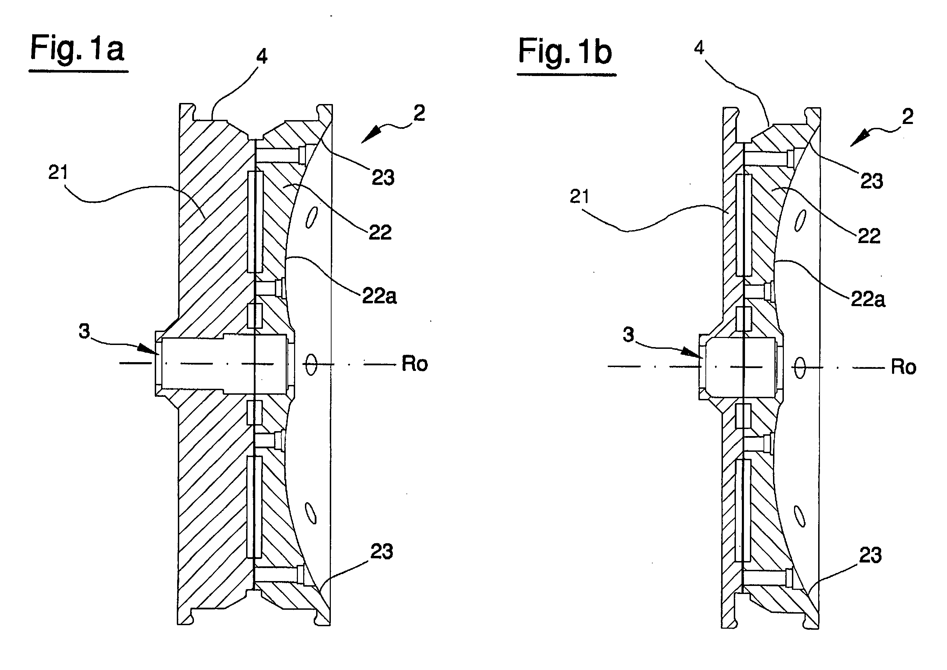

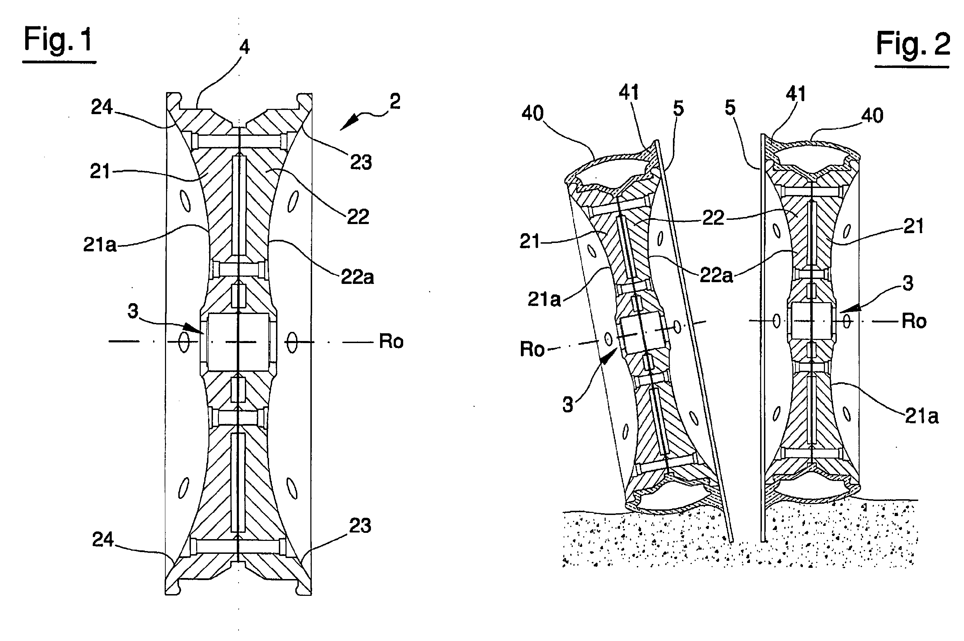

In a preferred embodiment of the rim, the external portion 21 is symmetrical with respect to the internal portion 22. The external portion 21 exhibits an external surface 21a which, on a section plane containing the rotation axis Ro, exhibits a curved continuous concave profile. To facilitate unloading of any earth accumulation, the profile of the external surface 21a of the external portion 21 also exhibits two end portions 24 which are mutually divergent, each of which forms, in a distancing direction from the rotation axis Ro, an acute angle with respect to a perpendicular plane to the rotation axis Ro. In an alternative embodiment, illustrated in figure 1a, the external portion 21 could be provided with an external surface 21a having a flat development, still more effective in limiting the accumulations of earth on the external side of the wheel. Figure 1b shows a slimmer version of the rim, in which the external portion 21 exhibits a considerably smaller thickness than the embodiment illustrated in figure 1a.

The external portion 21 can also obviously be made of a plastic material or a metal material. In the preferred embodiment of the rim, in which the internal portion and the external portion are symmetrical, it is therefore possible to obtain a rim made of a plastic material, resistant but considerably lighter with respect to rims of known type.

The internal portion 22 and the external portion 21 are preferably coupled to one another on a perpendicular plane to the rotation axis Ro, for example by means of a plurality of bolts. The internal portion and the external portion are further conformed such as to define the channel 4 for receiving the tyre 40.

As already mentioned in the introductory part of the description, the rim of the present invention is mainly directed to use for agricultural wheels, in particular for pneumatic (or not) direct-seeding seeders. These machines, which are generally provided with several groups of wheel parts of the type arranged as illustrated in figure 1, are of known type and are not illustrated in the figures.

The wheel of the invention comprises a rim 2 according to the present invention, to which rim 3 a tyre 40 is associated. The tyre 40 is provided with a lip 41 which projects in an axial direction from the side of the internal portion 21 of the rim. A disc 5 is positioned on the side of the internal portion 21 of the rim in contact with the lip 41 of the tyre 40.

The contact between the lip 41 and the disc 4 enables the external surface 22a of the internal portion 22 of the rim to be insulated, such as to obstruct ingress of earth between the disc 4 and the earth 2. In any case, as already described, an eventual entry of earth can be readily evacuated, during the rotation of the wheel, thanks to the conformation of the external surface 22a of the internal portion 22.

The present invention provides important advantages.

The possibility the rim offers of being made of a plastic material, thanks to its rigid and resistant conformation, enables much lighter wheels to be realised with respect to the wheels presently available on the market. The contained weight of the wheels, together with the releasable coupling between the internal portion and the external portion of the rim, further enable the mounting and demounting operations of the wheels to be done simply and rapidly. A further important advantage is the shape of the profile of the external surfaces of the two portions of the rim, which firmly obstructs the formation of earth accumulations and facilitates removal thereof.

## Claims

1. A rim for a wheel of a seeder machine, comprising: a main body (21, 22) provided with a central hub (3) for associating the rim to a rotation axis (Ro), and with a channel (4), positioned on a periphery of the main body (2) and predisposed to receive a tyre (40); the main body (21, 22) comprising an internal portion (22) and an external portion (21) removably coupled to one another, the internal portion (22) being provided with an external surface (22a) which, on a section plane containing the rotation axis (Ro), exhibits a curved concave profile; **characterised in that** the external portion (21) exhibits an external surface (21a) which includes the rim edge area and has an over all flat development.

2. The rim of claim 1, wherein the profile of the external surface (22a) of the internal portion (22) exhibits two diverging end portions (23), each of which, in a distancing direction from the rotation axis (Ro), forms an acute angle with respect to a plane that is perpendicular to the rotation axis (Ro).

3. The rim of claim 1 or 2, wherein the internal portion (22) and the external portion (21) are coupled to one another on a plane that is perpendicular to the rotation axis (Ro).

4. The rim of one of the preceding claims, wherein the internal portion (22) is made of a plastic material.

5. The rim of one of the preceding claims, wherein the internal portion (22) is made of a metal material.

6. The rim of one of the preceding claims, wherein the external portion (21) is made of a plastic material.

7. The rim of one of the preceding claims, wherein the external portion (21) is made of a metal material.

8. A wheel for a seeder machine, comprising: a rim (2) as in one of the preceding claims; a tyre (40), associated to the rim (2) which is provided with a lip (41) which projects in an axial direction towards the internal portion (22) of the rim; a disc (5), positioned on the side of the internal portion (22) of the rim in contact with the lip (41) of the tyre.

## Patentansprüche

1. Felge für ein Rad einer Sämaschine, umfassend einen Hauptkörper (21, 22), versehen mit einer zentralen Nabe (3), um die Felge mit einer Rotationsachse (Ro) zu verbinden, und mit einem Kanal (4), positioniert an einer Umfangslänge des Hauptkörpers (2) und ausgelegt, um einen Reifen (40) aufzunehmen, wobei der Hauptkörper (21, 22) einen internen Abschnitt (22) und einen externen Abschnitt (21) umfasst, abnehmbar miteinander verkoppelt, und der interne Abschnitt (22) mit einer externen Oberfläche (22a) versehen ist, die in einer Schnittebene, die die Rotationsachse (Ro) enthält, ein gekrümmtes konkaves Profil aufweist, **dadurch gekennzeichnet, dass** der externe Abschnitt (21) eine externe Oberfläche (21a) aufweist, die den Felgenkantenbereich umfasst und eine flache Gesamtentwicklung besitzt.

2. Felge nach Anspruch 1, wobei das Profil der externen Oberfläche (22a) des internen Abschnitts (22) zwei auseinanderlaufende Endabschnitte (23) aufweist, die jeweils in einer von der Rotationsachse (Ro) wegführenden Entfernung einen spitzen Winkel zu einer Ebene bilden, die senkrecht zur Rotationsachse (Ro) verläuft.

3. Felge nach Anspruch 1 oder 2, wobei der interne Abschnitt (22) und der externe Abschnitt (21) auf einer Ebene, die senkrecht zur Rotationsachse (Ro) verläuft, miteinander verkoppelt sind.

4. Felge nach einem der vorhergehenden Ansprüche, wobei der interne Abschnitt (22) aus Kunststoffmaterial besteht.

5. Felge nach einem der vorhergehenden Ansprüche, wobei der interne Abschnitt (22) aus Metallmaterial besteht.

6. Felge nach einem der vorhergehenden Ansprüche, wobei der externe Abschnitt (21) aus Kunststoffmaterial besteht.

7. Felge nach einem der vorhergehenden Ansprüche, wobei der externe Abschnitt (21) aus Metallmaterial besteht.

8. Rad für eine Sämaschine, umfassend eine Felge (2) nach einem der vorhergehenden Ansprüche, einen Reifen (40), verbunden mit der Felge (2), der mit einer Lippe (41) versehen ist, die in einer axialen Richtung zum internen Abschnitt (22) der Felge ragt, sowie eine Scheibe (5), positioniert an der Seite des internen Abschnitts (22) der Felge in Kontakt mit der Lippe (41) des Reifens.

## Revendications

1. Jante pour la roue d'une semeuse, comprenant : un corps principal (21, 22) équipé d'un moyeu central (3) pour associer la jante à un axe de rotation (Ro), et d'un canal (4) situé sur une périphérie du corps principal (2) et pouvant accueillir un pneu (40) ; le corps principal (21, 22) présentant une section interne (22) et une section externe (21) accouplées l'une à l'autre de façon amovible, la section interne (22) comportant une surface externe (22a) qui, sur un plan de coupe contenant l'axe de rotation (Ro), a un profil concave courbe ; **caractérisée en ce que** la section externe (21) présente une surface externe (21a) qui englobe la zone du bord de jante et suit, dans l'ensemble, un développement plat.

2. Jante selon la revendication 1, **caractérisée en ce que** le profil de la surface externe (22a) de la section interne (22) présente deux sections terminales divergentes (23), chacune d'elles, dans une direction en éloignement de l'axe de rotation (Ro), forme un angle aigu par rapport à un plan qui est perpendiculaire à l'axe de rotation (Ro).

3. Jante selon les revendications 1 ou 2, **caractérisée en ce que** la section interne (22) et la section externe (21) sont accouplées l'une à l'autre sur un plan qui est perpendiculaire à l'axe de rotation (Ro).

4. Jante selon l'une quelconque des revendications précédentes, **caractérisée en ce que** la section interne (22) est fabriquée en matière plastique.

5. Jante selon l'une quelconque des revendications précédentes, **caractérisée en ce que** la section interne (22) est fabriquée en matière métallique.

6. Jante selon l'une quelconque des revendications précédentes, **caractérisée en ce que** la section externe (21) est fabriquée en matière plastique.

7. Jante selon l'une quelconque des revendications précédentes, **caractérisée en ce que** la section externe (21) est fabriquée en matière métallique.

8. Roue pour une semeuse, comprenant : une jante (2) selon l'une des revendications précédentes ; un pneu (40) associé à la jante (2) qui présente un rebord (41) qui se projette dans une direction axiale vers la section interne (22) de la jante ; un disque (5) positionné sur le côté de la section interne (22) de la jante en contact avec le rebord (41) du pneu.
